# EUROPÄISCHE PATENTSCHRIFT

(11) **EP 1 295 737 B1**
(45) Veröffentlichungstag und Bekanntmachung des Hinweises auf die Patenterteilung: **21.12.2005**
(21) Anmeldenummer: 02021342.7
(22) Anmeldetag: 23.09.2002
(51) Int. Cl.: B60G 17/015, B60G 17/052

(54) **Bestimmung von Federhöhe und Druck in Federelementen, insbesondere Luftfedern, für Kraftfahrzeuge**
Determination of height and pressure in spring elements, especially air springs, for vehicles
Détermination de hauteur et pression d'éléments de ressort, notamment ressorts à air, pour véhicule

(30) Priorität: 25.09.2001 DE 10147185
(43) Veröffentlichungstag der Anmeldung: 26.03.2003
(73) Patentinhaber: KNORR-BREMSE SYSTEME FÜR NUTZFAHRZEUGE GMBH, 80809 München (DE)
(72) Erfinder: Eisenmann, Markus, 71229 Leonberg (DE); Karthäuser, Klaus, 71723 Grossbottwar (DE); Huelse, Thorsten, 70469 Feuerbach (DE); Marquardt, Hans, 71254 Ditzingen (DE)

(56) Entgegenhaltungen:
- EP-A- 0 957 373
- DE-A- 3 423 602
- DE-A- 3 815 612
- DE-A- 4 206 990
- GB-A- 2 177 475
- US-A- 4 798 369
- US-A- 5 936 161
- US-A- 6 032 535
- US-B1- 6 223 600

## Beschreibung

Die Erfindung betrifft ein Verfahren zur Bestimmung der Federhöhe und des Drucks in einem mit einem Gas befüllten Federelement, insbesondere in einer Luftfeder, gemäß dem Oberbegriff des Anspruchs 1 sowie ein Federelement, das mit einem Gas befüllt ist, für ein Fahrzeug gemäß dem Oberbegriff des Anspruchs 7. Außerdem betrifft die Erfindung ein Federsystem und ein Kraftfahrzeug mit mindestens einem Federelement.

Luftfedern werden im Fahrzeugbau als tragende Teile im Fahrzeug zwischen Achse und Aufbau des Fahrzeugs angeordnet. Insbesondere ist bei mehrachsigen Fahrzeugen es erforderlich bzw. erstrebenswert, dass sich bei unterschiedlichen Beladungszuständen der Abstand zwischen Aufbau und Achse nicht ändern soll. Deshalb wird die Höhe der Luftfedern gemessen und bei Abweichungen das System aus Luftfedern belüftet bzw. entlüftet, um es entsprechend nachzuregeln.

Aus EP 957 373 A2 ist eine Luftfeder bekannt, bei der berührungslos Abstand und Druck innerhalb der Luftfeder gemessen werden. Für die Druckbestimmung wird hierbei die Sendesignalleistung oder die Empfangsverstärkung eines in zu einem ersten Reflektor unterschiedlich entfernten zweiten Reflektor derart geregelt, dass die von einem Schallwandler gemessene Amplitude der vom ersten Reflektor zurückreflektierten Schallwellen auf einem konstant Wert bleibt. Der Druck wird nicht unmittelbar hieraus ermittelt, sondern wird berechnet mittels eines Temperaturwerts, der aus der Laufzeit eines Echo-Signals zur Abstandmessung geschätzt wird.

Nachteilig bei dieser Messanordnung bzw. diesem Messverfahren der komplexe Aufbau und die indirekte Bestimmung des Drucks mittels geschätzter Werte von druckabhängigen Einflussgrößen.

Weiterhin ist aus US-A-6 032 535 ein gattungsgemäßes Verfahren zur berührungslosen Messung des Abstands und des Drucks innerhalb einer Luftfeder beschrieben.

Die Aufgabe der Erfindung besteht darin, ein alternatives Verfahren zur Bestimmung der Federhöhe und des Drucks in einem mit einem Gas befüllten Federelement bereitzustellen. Des Weiteren besteht eine zweite Aufgabe der Erfindung darin, die Regelung von Federelementen, insbesondere von Luftfedern, zu verbessern.

Gelöst wird diese Aufgabe mittels eines Verfahrens zur Bestimmung der Federhöhe und des Drucks in mit einem Gas befüllten Federelement, insbesondere in einer Luftfeder, wobei wenigstens eine erste druckabhängige Messgröße erfasst wird und wenigstens eine zweite Messgröße erfasst wird und mittels der wenigstens einen ersten Messgröße der Ist-Druck unabhängig von der wenigstens einen zweiten Messgröße ermittelt wird und mittels der wenigstens einen zweiten Messgröße die Ist-Federhöhe des Federelements unabhängig von der wenigstens einen ersten Messgröße ermittelt wird und wobei zur Erfassung bzw. Ermittlung des Ist-Drucks und der Federhöhe ein Signal von einem Sender an einen Empfänger übermittelt wird, das dadurch weitergebildet wird, dass als erste Messgröße die Impedanz des Senders ermittelt wird.

Durch eine Erfassung der ersten druckabhängigen Messgröße und der zweiten Messgröße, die nicht notwendigerweise druckabhängig sein muss, wird der Zustand eines Federelements exakt erfasst. Insbesondere kann die Erfassung bzw. Ermittlung parallel d.h. gleichzeitig und unabhängig voneinander stattfinden.

Anhand der Bestimmungen der Zustände von weiteren Federn am Fahrzeug kann somit bei wechselnden Belastungszuständen eine optimale Verteilung von Federhöhe und Druck in jedem Federelement erzielt werden. Im Rahmen der Erfindung kann eine Feder sowohl mit Luft als auch mit anderen Gas- bzw. Gasgemischen befüllt sein.

Das berührungslose Messen des Drucks bzw. der Federhöhe hat den Vorteil, dass keine aufwendigen Umbaumaßnahmen vorgenommen werden müssen. Außerdem können bereits vorhandene Federelemente auf einfache Weise nachgerüstet werden. Für die Messungen ist es denkbar, dass zur Druckbestimmung und Federhöhenbestimmung nur ein Sender und ein Empfänger erforderlich ist. Darüber hinaus soll es möglich sein, dass ein Sender an einen Empfänger für die Druckermittlung und an einen Empfänger für die Federhöhenermittlung ein Signal sendet. Auch kann vorgesehen sein, dass jeweils ein Sender samt Empfänger für jede der Messungen vorhanden ist.

Als erste Messgröße wird die Impedanz des Senders ermittelt wird. Die Erfassung dieser Messgrößen, die druckabhängig sind, beruhen auf der prinzipiellen Überlegung, dass durch die Änderung des Gasdrucks im Federelement sich diverse Parameter bzw. Zustandsgrößen von Einrichtungen des Federelements ebenfalls ändern können. Zu diesen druckabhängigen Parametern gehören u.a. die Signalamplitude und die Impedanz des (Ultraschall-)Senders. Durch die Erfassung und die Verwertung der gewonnenen Informationen bzw. Messgrößen kann der Ist-Druck ermittelt werden. Anschließend kann in Verbindung und Kombination mit der (parallel) ermittelten Ist-Federhöhe eine optimale Einstellung der Federelemente bzw. des gesamten Federsystems erfolgen.

Des Weiteren ist es vorzugswürdig, wenn das Signal reflektiert wird, insbesondere als Echosignal. Durch die Reflektion des Signals als Echosignal können der Sender und der Empfänger in einer Einrichtung oder Einheit zusammengefasst werden. Diese konstruktive Vereinfachung erleichtert den Einbau in das Federelement. Selbstverständlich kann das Signal mehrfach oder durch geeignete Reflexionsmittel zu einem Empfänger geleitet werden, der nicht notwendigerweise neben einem Sender angeordnet ist.

Als besonders vorteilhaft hat es sich erwiesen, dass als Signal ein Ultraschallsignal übermittelt wird. Die Verwendung des Ultraschallsignals besitzt den Vorteil, dass am Fahrzeug keine weiteren hörbaren störenden Schallquellen durch den Sender entstehen. So werden Geräusche oder störende hochfrequente Schallwellen vermieden.

Außerdem treten bei der Verwendung von Ultraschallwellen innerhalb des Balgs einer Luftfeder keine Verwirbelungen (durch Fahrtwind) der Schallwellen auf. Infolge des im Federelement z.B. Luftfeder herrschenden Überdrucks ist außerdem eine sehr gute Reichweite der Ultraschallwellen möglich.

Außerdem ist es von Vorteil, dass als zweite Messgröße die Laufzeit des Signals zwischen Sender und Empfänger ermittelt wird.

In einer vorzugswürdigen Weiterbildung der Erfindung wird zur Laufzeitermittlung die Laufzeit des Signals bezüglich einer Referenzmessstrecke gemessen. Durch die Referenzmessstrecke mit einer vorbestimmten, genauen Distanz wird erreicht, dass die Messung der Laufzeit des Schalls unabhängig von der druckabhängigen Schallgeschwindigkeit wird, sodass hierdurch die Laufzeit des Schalls exakt bestimmt werden kann. Somit lässt sich die Federhöhe präzise und leicht berechnen durch die Relativwerte der beiden Laufzeiten.

Die Referenzmessstrecke kann bspw. gebildet werden durch die Anordnung eines Reflektors (z.B. Drahtbügel) in einem vorbestimmten Abstand vom Sender und Empfänger.

Die zweite Aufgabe der Erfindung wird gelöst durch ein Verfahren zur Regelung des Drucks und der Federhöhe in einem mit einem Gas befüllten Federelement, insbesondere in einer Luftfeder, wobei nach Bestimmung des Gasdrucks und der Federhöhe mittels des beschriebenen Verfahrens ein Soll-Druck und/oder eine Soll-Federhöhe eingestellt wird. Nach Ermittlung des Gasdrucks und der Federhöhe wird ein vorbestimmter Druck und/oder eine vorbestimmte Federhöhe im Federelement eingeregelt. Durch diese Regelung und Einstellung des Federelements bzw. eines Federsystems mit mehreren Federelementen lässt sich eine optimale Ausnutzung und Verteilung der Lasten auf den Achsen bei Fahrzeugen erreichen. Hierzu werden die Federelemente entsprechend be- oder entlüftet.

Darüber hinaus wird die Aufgabe gelöst durch ein Federelement für ein Fahrzeug, das mit einem Gas befüllt ist, insbesondere Luftfeder, mit einem Sender und einem Empfänger für ein Signal des Senders zur Erfassung bzw. Ermittlung des Ist-Drucks und der Ist-Federhöhe und umfassend eine erste Erfassungseinrichtung zur Erfassung wenigstens einer ersten druckabhängigen Messgröße, und eine zweite Erfassungseinrichtung zur Erfassung wenigstens einer zweiten Messgröße, eine erste Ermittlungseinrichtung zur Ermittlung des Ist-Drucks mittels der wenigstens einen ersten Messgröße, unabhängig von der zweiten Messgröße, und eine zweite Ermittlungseinrichtung zur Ermittlung der Ist-Federhöhe mittels der wenigstens einen zweiten Messgröße, unabhängig von der ersten Messgröße, das dadurch weitergebildet wird, dass die erste Messgröße die Impedanz des Senders ist.

Diese Ausführung dient auch zur Durchführung des erfindungsgemäßen Verfahrens.

Erfindungsgemäß ist vorgesehen, dass die Druckermittlung unabhängig und unbeeinflusst von der zweiten Messgröße erfolgt und die Federhöhenbestimmung unabhängig von der ersten (druckabhängigen) Messgröße stattfindet.

Die erste druckabhängige Messgröße ist die Impedanz des Senders. Hierbei wird zur Druckbestimmung die Impedanz des Senders z.B. eines Ultraschallwandlers als Messgröße für den Druck im Federelement ausgenutzt. Bei entsprechend guter Impedanzanpassung an die Luft in einer Luftfeder beispielsweise wird die Impedanz der Luft (Z = p/v) sich auf die Membranimpedanz des Wandlers auswirken. Eine Möglichkeit, die Membranimpedanz eines Ultraschallwandlers zu bestimmen, besteht darin, die Phasenlage zwischen Strom und Spannung des Ultraschallsensors in Abhängigkeit des Luftdrucks zu messen. Bei Veränderung des Gasdrucks im Federelement ändert sich somit auch die Phasenlage bzw. Impedanz des Wandlers bzw. Senders. Die druckabhängige gemessene Phasenlage stellt ein Maß für den Druck bzw. die Druckänderung dar.

Vorzugsweise weist das Federelement einen Sender und einen Empfänger für ein Signal des Senders auf, wobei mittels des Signals oder der Signale der Ist-Druck und/oder die Ist-Höhe der Feder bestimmt werden kann. Erfindungsgemäß ist es durchaus möglich, dass der Druck
und die Federhöhe jeweils mittels eines gesonderten Signals bestimmt werden können. Ebenso ist es denkbar, dass die beiden Größen nur mittels eines Signals bestimmt werden können, da sich aus den Parametern z.B. Signallaufzeit, Impedanz des Senders bzw. Phasenlage diese beiden Größen Druck und Federhöhe ergeben.

Um z.B. die Laufzeit des Signals und damit die Federhöhe auf einfache Weise zu ermitteln, weist das Federelement vorteilhafterweise ein Reflektionsmittel für das Signal des Senders auf. Mittels eines Echolotsignals und der Anwendung des Verfahrens kann die Anordnung von Sender und Empfänger in einer Baueinheit stattfinden. Somit entfallen aufwendige Umkonstruktionen, wobei diese Ausgestaltung eine Nachrüstung bekannter und verwendeter Federelemente auf einfache Weise möglich sind.

Weiterhin ist es vorteilhaft, wenn das Signal ein Ultraschallsignal ist. Diese hochfrequenten Signale sind für das menschliche Ohr nicht hörbar und verursachen somit keine störenden oder nervenden Töne oder Geräusche.

Eine weitere erste druckabhängige Messgröße ist die Amplitude des Signals. Da sich die Signalamplitude mit dem Druck ändert, wird die Amplitude des ausgehenden Signals am Sender mit der Amplitude des empfangenen Signals verglichen. Der gemessene, festgestellte Unterschied gibt ein Maß für den Ist-Druck im Federelement.

Außerdem ist es vorzugswürdig, wenn die zweite Messgröße durch die Laufzeit des Signals zwischen Sender und Empfänger dargestellt ist. Wenn bspw. der Abstand zwischen Sender und Empfänger mit der Änderung der Federhöhe einhergeht, so verkürzt oder verlängert sich die Laufzeit des Signals zwischen Sender und Empfänger. Daher wirkt sich die Federhöhe unmittelbar auf die Laufzeit auf. Für eine derartige Messung können bspw. Sender und Empfänger einander gegenüber angeordnet sein. Weiterhin können Sender und Empfänger in einer Baueinheit unter Anwendung des Echolotverfahrens zusammengefasst sein in einer Einrichtung.

In einer weiteren vorteilhaften Ausführungsform ist im Federelement eine Referenzmessstrecke ausgebildet. Diese Referenzmessstrecke, bei der ein Reflektor in einem fixen Abstand vom Sender angeordnet ist, kann zur Eichung der Laufzeitmessung herangezogen werden. Die Höhe der Luftfeder kann unter Verwendung der Referenzmessstrecke aus dem Relativwert der Laufzeiten der Schallsignale bzgl. der Referenzmessstrecke und der Messstrecke (Federhöhe) berechnet werden.

In einer Weiterbildung der Erfindung ist die erste und zweite Erfassungseinrichtung für die erste und zweite Messgröße jeweils als Ultraschallwandler, insbesondere mit einem piezoelektrischen Element, ausgebildet.

Eine weitere Vereinfachung des Aufbaues von Ultraschallwandlern besteht darin, dass der erste und zweite Ultraschallwandler eine gemeinsame Elektrode aufweisen.

In einer alternativen Ausführungsform sind der erste und der zweite Ultraschallwandler in einem vorbestimmten Abstand voneinander angeordnet. Der erste Ultraschallwandler dient zur Messung der ersten Messgröße, der zweite Ultraschallwandler zur Messung der zweiten Messgröße.

Darüber hinaus weist in einer besonderen Ausführungsform das Federelement eine Regeleinrichtung auf zur Einstellung eines vorbestimmten Soll-Gasdrucks und/oder einer vorbestimmten Soll-Federhöhe, nachdem der Ist-Druck und die Ist-Federhöhe bestimmt wurde. Mittels der erfindungsgemäßen Regeleinrichtung können optimale Ausnutzungen der Achslasten erzielt werden.

Die Aufgabe der Erfindung wird ferner gelöst durch ein Federsystem, ausgebildet mit den beschriebenen Federelementen. Hierbei können die Federelemente vorteilhafterweise miteinander in Verbindung sein zur Abstimmung und Einstellung der einzelnen Federelemente.

Im weiteren wird die Aufgabe gelöst durch ein Kraftfahrzeug mit mindestens einem beschriebenen erfindungsgemäßen Federelement oder einem entsprechenden erfindungsgemäßen Federsystem.

Die Erfindung wird nachstehend ohne Beschränkung des allgemeinen Erfindungsgedankens anhand von Ausführungsbeispielen unter Bezugnahme auf die Zeichnungen exemplarisch beschrieben, auf die im übrigen bezüglich aller im Text nicht näher erläuterten erfindungsgemäßen Einzelheiten ausdrücklich verwiesen wird. Es zeigen:
- Fig. 1: eine schematische Darstellung einer Luftfeder im Querschnitt,
- Fig. 2: schematisch den Aufbau einer Messanordnung, und
- Fig. 3: eine Ausführungsform eines Ultraschallwandlers.

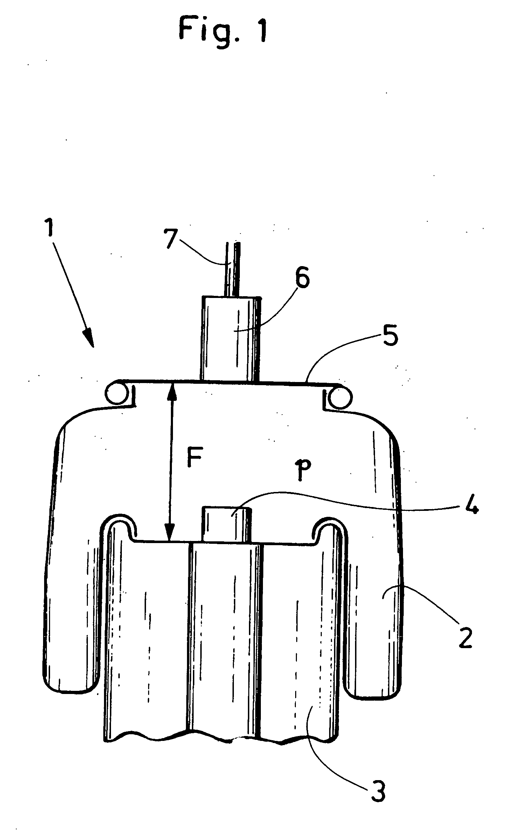

Fig. 1 zeigt den prinzipiellen Aufbau einer Luftfeder 1, die aus einem Kolben 3, einem Rollbalg 2 und einer Abdeckplatte 5 besteht. Die Abdeckplatte 5 ist bspw. am Längsträger eines Fahrzeugs fest angebracht. Der Kolben 3 ist rad- bzw. achsseitig am Fahrzeug befestigt. Beim Einfederungsvorgang der Luftfeder 1 rollt sich der Balg 2 auf dem Kolben 3 ab, wobei sich der Abstand zwischen Kolben 3 und Abdeckplatte 5 verändert.

Der Kolben 3 weist einen überstehenden Rand auf, um den sich das Ende des Rollbalgs 2 formschlüssig anlegt. Am Kolben 3 ist innenseitig zum Rollbalg 2 ein Gummipuffer 4 angeordnet, um zu verhindern, dass bei einer zu großen Last auf dem Lastträger die Luftfeder 1 nicht zerstört wird. Bei dieser Überbelastung liegt die Abdeckplatte 5 direkt auf dem Gummipuffer 4 auf.

Zum anderen Ende des Rollbalgs 2 ist der Rollbalg 2 mittels der Abdeckplatte 5 abgedichtet. Der Rollbalg 2 kann mit einem beliebigen Gas gefüllt sein, wobei sich Luft als gutes und jederzeit ständig verfügbares Arbeitsmedium sich bewährt hat.

Auf der Außenseite der Abdeckplatte 5 ist ein Sensor 6 angeordnet, der mittels der Anschlüsse 7 mit weiteren Einrichtungen der Luftfeder 1 oder des Fahrzeugs verbunden ist. Der Sensor 6 kann somit mit weiteren Messgeräten, Steuer- und Regelelektroniken des Federelements oder eines Fahrzeugs verbunden sein.

Der Abstand zwischen dem Kolben 3 und der Abdeckplatte 5 wird allgemein als Federhöhe F bezeichnet. Zur Messung der Federhöhe befindet sich in der Abdeckplatte 5 als Sensor 6 ein Ultraschallsender und -empfänger.

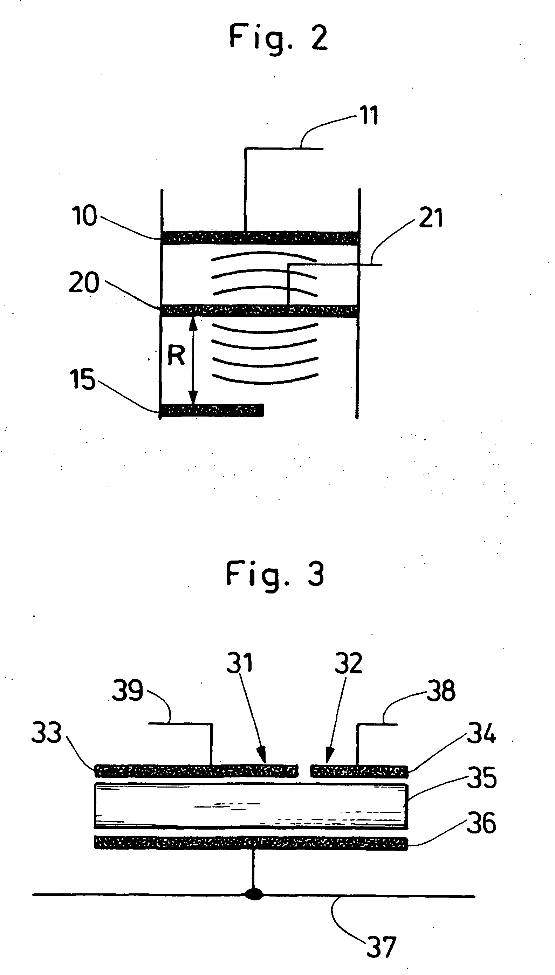

Das vom Sender ausgestrahlte Signal wird an der Oberseite des Kolbens 3 reflektiert und an die Sensoreinheit 6 zurückgesandt. Wie weiter unten ausgeführt wird (s. Fig. 2), enthält der Sensor 6 eine Referenzmessstrecke, die u.a. zur Eichung der Laufzeit des Signals und damit für die Federhöhe F herangezogen werden kann.

In Fig. 2 ist der prinzipielle Aufbau eines Sensors 6 (Fig. 1) dargestellt. Die Sensoreinheit 6 besteht aus einem Ultraschallwandler 10 mit einem elektrischen Anschluss 11. Dieser Wandler 10 dient zur Druckmessung des Luftdrucks p im Balg 2 (Fig. 1). Für die Distanzmessung ist in einem fixen Abstand vom ersten Ultraschallwandler 10 ein weiterer, zweiter Ultraschallwandler 20 angeordnet.

Des Weiteren ist in einem Abstand R vom Wandler 20 ein Reflektor 15 zur Bildung einer Referenzmessstrecke angeordnet. Der Reflektor 15 gibt ebenfalls ein Echosignal des vom Wandler 20 ausgesendeten Ultraschallsignals an den Wandler 20 als Reflektionssignal (Referenz-Echosignal) ab.

Der Wandler 20 empfängt darüber hinaus ein zweites reflektiertes Ultraschallsignal (Echosignal) vom Kolben 3 (Fig. 1). Die Höhe der Luftfeder 1 ergibt sich aus dem Relativwert der Laufzeiten des Schallsignals, die der Schall sowohl auf der Referenzmessstrecke bzw. der Federhöhe F benötigt.

Für die Druckbestimmung wird die Amplitude des Signals am Wandler 10 gemessen, deren Größe vom Luftdruck im Rollbalg 2 abhängt. Mittels dieser Vorrichtung kann gleichzeitig sowohl die Laufzeit des Ultraschallsignals und damit die Federhöhe F als auch der in der Luftfeder 1 bzw. dem Balg 2 momentan herrschende Druck p gemessen werden.

Als Sender bzw. Empfänger werden Ultraschallwandler verwendet, die im Allgemeinen aus einem piezoelektrischen Element mit zwei Elektroden bestehen. Das piezoelektrische Element kann sowohl als Sender für das Ultraschallsignal als auch als Empfänger für das Abstandsechosignal verwendet werden.

In Fig. 3 ist eine alternative Ausführungsform für einen Ultraschallwandler im Querschnitt dargestellt. Hierbei sind zwei Ultraschallwandler in einem Bauelement bzw. Einheit zusammengefasst. Diese Baueinheit besteht aus einem ersten Wandler 31 und einem zweiten Wandler 32. Beide Wandler 31, 32 haben ein piezoelektrisches Element 35 und eine Elektrode 36 gemeinsam. Diese gemeinsame Elektrode 36 ist mit einem elektrischen Anschluss 37 verbunden. Der erste Wandler 31 wird gebildet aus der gemeinsamen Elektrode 36, dem piezoelektrischen Element 35 und einer Elektrode 33 mit einem Anschluss 39, während der zweite Wandler 32 statt der Elektrode 33 über eine andere Elektrode 34 mit einem Anschluss 38 verfügt, die neben der Elektrode 33 auf dem piezoelektrischen Element 35 angeordnet ist.

Insgesamt wird durch diese Anordnung eine vereinfachte Bauweise von zwei Wandlern erreicht.

In einer weiteren, hier nicht dargestellten Ausführung basiert der Gegenstand der Erfindung auf der Überlegung, dass der Luftdruck im Rollbalg der Luftfeder unmittelbar sich auf die Impedanz des (Ultraschall-) Wandlers auswirkt. Hierdurch wird die Phasenlage zwischen Strom und Spannung bei der Ansteuerung des Wandlers verändert. Um die Phasenlage bestimmen zu können, wird die Spannung am Wandler und dessen Stromaufnahme (z.B. über einen Vorwiderstand) zeitlich gemessen. Die Verschiebung der Phasenlage kann als Maß für die Bestimmung des Luftdrucks im Balg bzw. im Federelement herangezogen werden.

Insgesamt wird durch die Erfindung erreicht, dass mit einem Sensor der Weg bzw. der im System herrschende Druck auf einfache Weise sehr genau gemessen werden kann.

### Bezugszeichenliste:

- 1: Luftfeder
- 2: Rollbalg
- 3: Kolben
- 4: Gummipuffer
- 5: Abdeckplatte
- 6: Sensor
- 7: Anschlüsse
- 10: Ultraschallwandler (Amplitudenmessung/Druck)
- 11: Anschluss
- 15: Reflektor
- 20: Ultraschallwandler (Laufzeitmessung / Federhöhe)
- 21: Anschluss
- 31: Wandler
- 32: Wandler
- 33: Elektrode
- 34: Elektrode
- 35: piezoelektrisches Element
- 36: Elektrode
- 37: gemeinsamer Anschluss
- 38: Anschluss
- 39: Anschluss
- F: Federhöhe
- R: Referenzmessstrecke
- p: Druck

## Patentansprüche

1. Verfahren zur Bestimmung der Federhöhe (F) und des Drucks (p) in einem mit einem Gas befüllten Federelement (1), insbesondere in einer Luftfeder, wobei wenigstens eine erste druckabhängige Messgröße erfasst wird und wenigstens eine zweite Messgröße erfasst wird und mittels der wenigstens einen ersten Messgröße der Ist-Druck unabhängig von der wenigstens einen zweiten Messgröße ermittelt wird und mittels der wenigstens einen zweiten Messgröße die Ist-Federhöhe unabhängig von der wenigstens einen ersten Messgröße ermittelt wird und wobei zur Erfassung bzw. Ermittlung des Ist-Drucks und der Ist-Federhöhe ein Signal von einem Sender an einen Empfänger übermittelt wird, **dadurch gekennzeichnet, dass** als erste Messgröße die Impedanz des Senders ermittelt wird.

2. Verfahren nach Anspruch 1, **dadurch gekennzeichnet, dass** das Signal reflektiert wird.

3. Verfahren nach Anspruch 1 oder 2, **dadurch gekennzeichnet, dass** als Signal ein Ultraschall-Signal übermittelt wird.

4. Verfahren nach einem oder mehreren der Ansprüche 1 bis 3, **dadurch gekennzeichnet, dass** als zweite Messgröße die Laufzeit des Signals zwischen Sender und Empfänger ermittelt wird.

5. Verfahren nach Anspruch 4, **dadurch gekennzeichnet, dass** zur Laufzeitermittlung die Laufzeit des Signals bezüglich einer Referenzmessstrecke (R) ermittelt wird.

6. Verfahren zur Regelung eines Drucks (p) und der Federhöhe (F) in einem mit einem Gas befüllten Federelement, insbesondere in einer Luftfeder, wobei nach Bestimmung des Gasdrucks und der Federhöhe mittels des Verfahrens nach einem der vorhergehenden Ansprüche 1 bis 5 ein Soll-Druck und/oder eine Soll-Federhöhe eingestellt wird.

7. Federelement (1) für ein Fahrzeug, das mit einem Gas befüllt ist, insbesondere Luftfeder, mit einem Sender und einem Empfänger für ein Signal des Senders zur Erfassung bzw. Ermittlung des Ist-Drucks und der Ist-Federhöhe und umfassend eine erste Erfassungseinrichtung (10) zur Erfassung wenigstens einer ersten druckabhängigen Messgröße, und eine zweite Erfassungseinrichtung (20) zur Erfassung wenigstens einer zweiten Messgröße, eine erste Ermittlungseinrichtung zur Ermittlung des Ist-Drucks mittels der wenigstens einen ersten Messgröße, unabhängig von der zweiten Messgröße, und eine zweite Ermittlungseinrichtung zur Ermittlung der Ist-Federhöhe mittels der wenigstens einen zweiten Messgröße, unabhängig von der ersten Messgröße, **dadurch gekennzeichnet, dass** die erste Messgröße die Impedanz des Senders ist.

8. Federelement (1) nach Anspruch 7, **gekennzeichnet durch** ein Reflektionsmittel (15) für das Signal.

9. Federelement (1) nach Anspruch 7 oder 8, **dadurch gekennzeichnet, dass** das Signal ein Ultraschall-Signal ist.

10. Federelement (1) nach einem der Ansprüche 7 bis 9, **dadurch gekennzeichnet, dass** die zweite Messgröße die Laufzeit des Signals zwischen Sender und Empfänger ist.

11. Federelement (1) nach Anspruch 10, **gekennzeichnet durch** eine Referenzmessstrecke (R) zur Laufzeitermittlung des Signals.

12. Federelement (1) nach Anspruch 7, **dadurch gekennzeichnet, dass** die erste und zweite Erfassungseinrichtung (10, 20) jeweils als Ultraschallwandler (10, 20, 31, 32), insbesondere mit einem piezoelektrischen Element (35), ausgebildet ist.

13. Federelement (1) nach Anspruch 12, **dadurch gekennzeichnet, dass** der erste und zweite Ultraschallwandler (31, 32) eine gemeinsame Elektrode (36) aufweisen.

14. Federelement (1) nach Anspruch 13, **dadurch gekennzeichnet, dass** der erste und zweite Ultraschallwandler (10, 20) in einem vorbestimmten Abstand voneinander angeordnet sind.

15. Federelement (1) nach einem oder mehreren der vorhergehenden Ansprüche 7 bis 14, **gekennzeichnet durch** eine Regeleinrichtung zur Einstellung eines vorbestimmten Gasdrucks und/oder einer vorbestimmten Federhöhe.

16. Federsystem für ein Kraftfahrzeug mit Federelementen (1) nach einem der Ansprüche 7 bis 15, wobei die Federelemente (1) miteinander verbunden sind.

17. Kraftfahrzeug mit mindestens einem Federelement (1) nach einem der Ansprüche 7 bis 15.

## Claims

1. Method of determining the spring height (F) and the pressure (p) in a spring element (1) charged with a gas, in particular in a pneumatic spring, wherein at least one first pressure-dependent measurand is detected and at least one second measurand is detected, and wherein by means of said at least one first measurand the actual pressure is determined independently of said at least one second measurand, and wherein by means of said at least one second measurand the actual spring height is determined independently of said at least one first measurand, and wherein a signal is transmitted from an emitter to a receiver for detecting or determining the actual pressure and the actual spring height, **characterised in that** the impedance of said emitter is determined as the first measurand.

2. Method according to Claim 1, **characterised in that** said signal is reflected.

3. Method according to Claim 1 or 2, **characterised in that** an ultrasonic signal is transmitted as signal.

4. Method according to one or several of the Claims 1 to 3, **characterised in that** the delay of the signal between said emitter and said receiver is determined as second measurand.

5. Method according to Claim 4, **characterised in that** the delay of the signal relative to a reference measuring distance (R) is determined for determination of the delay.

6. Method of controlling a pressure (p) and the spring height (F) in a spring element charged with a gas, in particular in a pneumatic spring, wherein a specified pressure and/or a specified spring height is set after the determination of the gas pressure and the spring height by means of the method according to one of the preceding Claims 1 to 5.

7. Spring element (1) for a vehicle, which is charged with a gas, in particular a pneumatic spring, comprising an emitter and a receiver for a signal of said emitter for detecting or determining the actual pressure and the actual spring height and comprising a first detector means (10) for detecting at least one first pressure-dependent measurand and a second detector means (20) for detecting at least one second measurand, a first detector means for detecting the actual pressure by means of said at least one first measurand, independently of said second measurand, and a second detector means for detecting the actual spring height by means of said at least one second measurand, independently of said first measurand, **characterised in that** said first measurand is the impedance of said emitter.

8. Spring element (1) according to Claim 7, **characterised by** a reflector means (15) for the signal.

9. Spring element (1) according to Claim 7 or 8, **characterised in that** said signal is an ultrasonic signal.

10. Spring element (1) according to any of the Claims 7 to 9, **characterised in that** said second measurand is the delay of the signal between said emitter and said receiver.

11. Spring element (1) according to Claim 10, **characterised by** a reference measuring distance (R) for determining the delay of said signal.

12. Spring element (1) according to Claim 7, **characterised in that** said first and second detector means (10, 20) are each configured as ultrasonic transducer (10 31, 32), including specifically a piezoelectric element (35).

13. Spring element (1) according to Claim 12, **characterised in that** said first and second ultrasonic transducers (31, 32) comprise an electrode (36) in common.

14. Spring element (1) according to Claim 13, **characterised in that** said first and second ultrasonic transducers (10, 20) are arranged at a predetermined spacing from each other.

15. Spring element (1) according to one or several of the preceding Claims 7 to 14, **characterised by** a control means for setting a predetermined gas pressure and/or a predetermined spring height.

16. Spring system for a motor vehicle, comprising spring elements (1) according to any of the Claims 7 to 15, wherein said spring elements (1) are connected to each other.

17. Motor vehicle including at least one spring element (1) according to any of the Claims 7 to 15.

## Revendications

1. Procédé à déterminer l'hauteur de ressort (F) et la pression (p) dans un élément de ressort (1) rempli d'un gaz, en particulier dans un ressort pneumatique, dans lequel au moins une première valeur indiquée dépendante de la pression est déterminée et au moins une deuxième valeur indiquée est déterminée, et dans lequel, moyennant ladite au moins une première valeur indiquée, la pression réelle est déterminée indépendamment de ladite au moins une deuxième valeur indiquée, et dans lequel, moyennant ladite au moins une deuxième valeur indiquée, l'hauteur de ressort réelle est déterminée indépendamment de ladite au moins une première valeur indiquée, et dans lequel un signal est transmis à partir d'un émetteur à un récepteur afin de détecter ou déterminer la pression réelle et l'hauteur de ressort réelle, **caractérisé en ce que** l'impédance dudit émetteur est déterminé en tant que la première valeur indiquée.

2. Procédé selon la revendication 1, **caractérisé en ce que** ledit signal est réfléchi.

3. Procédé selon la revendication 1 ou 2, **caractérisé en ce qu'**un signal ultrasonore est transmis en tant que le signal.

4. Procédé selon une ou plusieurs des revendications 1 à 3, **caractérisé en ce que** le temps de transit du signal entre ledit émetteur et ledit récepteur est déterminé en tant que la deuxième valeur indiquée.

5. Procédé selon la revendication 4, **caractérisé en ce que** le temps de transit du signal, relatif à une distance de mesure de référence (R), est déterminé pour la détermination du temps de transit.

6. Procédé de réglage d'une pression (p) et de l'hauteur de ressort (F) dans un élément de ressort rempli d'un gaz, en particulier dans un ressort pneumatique, dans lequel une pression de consigne et/ou une hauteur de ressort de consigne est ajustée après la détermination de la pression de gaz et de l'hauteur de ressort moyennant le procédé selon une des revendications précédentes 1 à 5.

7. Éléments de ressort (1) pour un véhicule, qui est rempli d'un gaz, en particulier un ressort pneumatique, comprenant un émetteur et un récepteur pour un signal dudit émetteur afin de détecter ou déterminer la pression réelle et l'hauteur de ressort réelle et comprenant un premier moyen détecteur (10) à détecter au moins une première valeur indiquée dépendante de la pression et un deuxième moyen détecteur (20) à détecter au moins une deuxième valeur indiquée, un premier moyen détecteur à détecter la pression réelle moyennant ladite au moins une première valeur indiquée, indépendamment de ladite deuxième valeur indiquée, et un deuxième moyen détecteur à détecter l'hauteur de ressort réelle moyennant ladite au moins une deuxième valeur indiquée, indépendamment de ladite première valeur indiquée, **caractérisé en ce que** ladite première valeur indiquée est l'impédance dudit émetteur.

8. Élément de ressort (1) selon la revendication 7, **caractérisé par** un moyen réflecteur (15) pour le signal.

9. Élément de ressort (1) selon la revendication 7 ou 8, **caractérisé en ce que** ledit signal est un signal ultrasonore.

10. Élément de ressort (1) selon une quelconque des revendications 7 à 9, **caractérisé en ce que** ladite deuxième valeur indiquée est le temps de transit du signal entre ledit émetteur et ledit récepteur.

11. Élément de ressort (1) selon la revendication 10, **caractérisé par** une distance de mesure de référence (R) à déterminer le temps de transit dudit signal.

12. Élément de ressort (1) selon la revendication 7, **caractérisé en ce que** chacun desdits premier et deuxième moyens détecteurs (10, 20) est configuré sous forme d'un transducteur à ultrasons (10, 20, 31, 32), comprenant, en particulier, un élément piézoélectrique (35).

13. Élément de ressort (1) selon la revendication 12, **caractérisé en ce que** lesdits premier et deuxième transducteurs à ultrasons (31, 32) comprennent une électrode (36) en commun.

14. Élément de ressort (1) selon la revendication 13, **caractérisé en ce que** lesdits premier et deuxième transducteurs à ultrasons (10, 20) sont disposés à un écart prédéterminé l'un de l'autre.

15. Éléments de ressort (1) selon une ou plusieurs des revendications précédentes 7 à 14, **caractérisé par** un moyen de réglage à ajuster une pression de gaz prédéterminée et/ou une hauteur de ressort prédéterminée.

16. Système à ressort pour un véhicule automobile, comprenant des éléments de ressort (1) selon une quelconque des revendications 7 à 15, dans lequel lesdits éléments de ressort (1) sont reliés l'un à l'autre.

17. Véhicule automobile à au moins un élément de ressort (1) selon une quelconque des revendications 7 à 15.
